# EUROPÄISCHE PATENTSCHRIFT

(11) **EP 4 402 399 B1**
(45) Veröffentlichungstag und Bekanntmachung des Hinweises auf die Patenterteilung: **13.05.2026**
(21) Anmeldenummer: 22790445.5
(22) Anmeldetag: 15.09.2022
(51) Int. Cl.: F17C 3/08, F17C 13/00

(54) **KRYOBEHÄLTER MIT WÄRMEBRÜCKENSCHALTER**
CRYOGENIC CONTAINER COMPRISING A THERMAL BRIDGE SWITCH
RÉSERVOIR CRYOGÉNIQUE DOTÉ D'UN COMMUTATEUR À PONT THERMIQUE

(30) Priorität: 15.09.2021 AT 5018821 U
(43) Veröffentlichungstag der Anmeldung: 24.07.2024
(73) Patentinhaber: Cryoshelter LH2 GmbH, 8143 Dobl-Zwaring (AT); Cryoshelter BioLNG GmbH, 8143 Dobl-Zwaring (AT)
(72) Erfinder: REBERNIK, Matthias, 8143 Dobl-Zwaring (AT)
(74) Vertreter: Schwarz & Partner Patentanwälte GmbH
(86) Internationale Anmeldenummer: PCT/EP2022/075607
(87) Internationale Veröffentlichungsnummer: WO 2023/041621

(56) Entgegenhaltungen:
- DE-B4- 102005 035 647
- US-A- 3 705 498

## Beschreibung

Die Erfindung betrifft einen Vorrichtung, umfassend einen Kryobehälter, insbesondere einen Wasserstoffbehälter, mit einem Innenbehälter und einen den Innenbehälter umschließenden Außenbehälter, wobei zwischen dem Innenbehälter und dem Außenbehälter eine den Innenbehälter zumindest teilweise umhüllende Kühllage angeordnet ist, welche sowohl gegenüber dem Innenbehälter als auch dem Außenbehälter isoliert ist, wobei eine Entnahmeleitung sowohl durch den Innenbehälter, als auch durch die Kühllage und den Außenbehälter geführt ist und diese dabei durchsetzt.

Gemäß dem Stand der Technik können verflüssigte Gase in Behältern ("Kryobehältern") gespeichert werden, um diese als Kraftstoff für beispielsweise einen Motor zu lagern. Verflüssigte Gase sind Gase, die bei Siedetemperatur im flüssigen Aggregatzustand vorliegen, wobei die Siedetemperatur dieses Fluids druckabhängig ist. Wird eine solche kryogene Flüssigkeit in einen Kryobehälter gefüllt, so stellt sich, abgesehen von thermischen Wechselspielen mit dem Kryobehälter selbst, ein Druck entsprechend der Siedetemperatur ein.

Im Anwendungsgebiet der Fahrzeugtechnik kann das Kryofluid als Treibstoff für ein Fahrzeug dienen, zu welchem Zweck der Kryobehälter am Fahrzeug mitgeführt wird. Üblicherweise werden Kryobehälter an der Seite des Fahrzeugrahmens montiert, und die Kryobehälter müssen eine ausreichende Isolationsfähigkeit aufweisen, damit das Kryofluid möglichst lange bei niedriger Temperatur im Kryobehälter verbleibt, da diese Behälter zumindest beim Stillstand des Fahrzeugs nicht aktiv gekühlt werden.

Beispielsweise wird Wasserstoff mit einer Temperatur von bis zu -253 °C in den Kryobehälter getankt, wobei sich das im Kryobehälter befindliche Kryofluid durch den konstanten Wärmeeintrag in den Kryobehälter stetig erwärmt, wodurch auch der Druck im Kryobehälter steigt. Sobald der Druck im Kryobehälter einen gewissen Schwellwert übersteigt, wird gasförmiges Kryofluid zum Druckabbau aus dem Behälter abgelassen. Es ist ersichtlich, dass es ein Bestreben ist, die Isolationsfähigkeit des Kryobehälters zu verbessern, um den Wärmeeintrag in diesen zu reduzieren, damit die Zeitspanne steigt, nach welcher Kryofluid aus dem Kryobehälter abgelassen wird.

Aus dem Stand der Technik ist daher bekannt, den Kryobehälter mit einem Innenbehälter und einen gegenüber dem Innenbehälter vakuumisolierten Außenbehälter zu schaffen. Besondere Weiterentwicklungen wie z.B. in der AT 504 888 B1 offenbart sehen vor, zwischen dem Innenbehälter und dem Außenbehälter Isolierschalen vorzusehen, die üblicherweise aus Metall gefertigt sind. Diese haben einerseits den Zweck, als Strahlungsschilde zu dienen, und andererseits, um eine thermische Masse bereitzustellen. Diese zusätzliche thermische Masse kann im Betrieb des Fahrzeugs auf der Temperatur des Kryofluids gehalten werden und nimmt nach dem Abstellen des Fahrzeugs den ersten Wärmeeintrag auf, wodurch das Kryofluid länger kalt bleibt.

Ein Kryobehälter mit einem thermisch leitendem Schild zwischen Innenbehälter und Außenbehälter ist in der US 3 705 498 A gezeigt, wobei eine Wärmebrücke zwischen dem Schild und einer Entnahmeleitung vorliegt. Auch die DE 10 2005 035647 zeigt einen Kryobehälter, bei dem ein Rohrsystem an einem Kühlschild anliegt.

Es ist nun die Aufgabe der Erfindung, derartige Kryobehälter mit Kühllagen zwischen Innenbehälter und Außenbehälter weiterzuentwickeln und zu optimieren.

Diese Aufgabe wird in einem ersten Aspekt der Erfindung durch eine Vorrichtung gelöst, die einen Kryobehälter umfasst, insbesondere einen Wasserstoffbehälter, mit einem Innenbehälter und einen den Innenbehälter umschließenden Außenbehälter, wobei zwischen dem Innenbehälter und dem Außenbehälter eine den Innenbehälter zumindest teilweise umhüllende Kühllage angeordnet ist, welche sowohl gegenüber dem Innenbehälter als auch dem Außenbehälter isoliert ist, wobei eine Entnahmeleitung sowohl durch den Innenbehälter, als auch durch die Kühllage und den Außenbehälter geführt ist und diese dabei durchsetzt, wobei die Vorrichtung einen Wärmebrückenschalter umfasst, welcher dazu ausgebildet ist, in einer geschlossenen Stellung zur Bildung einer Wärmebrücke einen Kontakt zwischen der Kühllage und der Entnahmeleitung herzustellen und in einer geöffneten Stellung zur Beseitigung der Wärmebrücke die Kühllage von der Entnahmeleitung zu trennen.

Der Wärmebrückenschalter ermöglicht erstmals, dass ein Wärmeübergang zwischen der Kühllage und der Entnahmeleitung selektiv herstellbar und trennbar ist. Dies kann insbesondere dazu ausgenutzt werden, um die Kühllage so rasch wie möglich zu kühlen, wenn Kryofluid aus dem Kryobehälter entnommen wird, bzw. um einen Wärmeeintrag in die Kühllage zu verhindern, sobald kein Kryofluid aus dem Kryobehälter mehr entnommen wird, um die Kühllage möglichst lange kalt zu halten. Dies ist dadurch bedingt, dass unabhängig von der Temperatur der Entnahmeleitung keine Wärme von der Entnahmeleitung in die Kühllage oder umgekehrt von der Kühllage in die Entnahmeleitung fließen kann, je nachdem, welches Bauteil zum jeweiligen Zeitpunkt die höhere Temperatur aufweisen mag. Damit wird ein Anbringungsort auch unabhängig vom Temperaturverlauf der Entnahmeleitung möglich und verbessert das gesamte Packaging des Systems. Ohne Wärmebrückenschalter müsste die Anbindung nämlich an der Stelle der Entnahmeleitung erfolgen, an der diese dieselbe Temperatur wie das Schild aufweist, andernfalls werden sogenannte "Fehlwärmeströme" groß und die Isolationsgüte schlechter.

Durch die zwei vorgenannten Funktionen des Wärmebrückenschalters kann erzielt werden, dass die sogenannte Hold Time verlängert wird, d.h. die Zeitspanne von einer Beendigung der Entnahme bis zu jenem Zeitpunkt, bei dem der Druck im Kryobehälter einen vordefinierten Schwellwert erreicht. Würde man den Wärmebrückenschalter nicht vorsehen, müsste man entweder eine ständige Wärmebrücke zwischen der Kühllage und der Entnahmeleitung vorsehen, wodurch sich die Kühllage nach der Beendigung der Entnahme zu schnell erwärmt, oder nie eine Wärmebrücke zwischen der Kühllage und der Entnahmeleitung vorsehen, wodurch die Kühllage jedoch nicht durch entnommenes Kryofluid gekühlt werden kann. Beide Probleme werden durch die Erfindung überwunden.

In einer bevorzugten Ausführungsform ist die Kühllage ein steifes Metallschild, bevorzugt ein Aluminiumschild, oder eine einschichtige oder mehrschichtige Metallfolie und weist bevorzugt an den Endkappen des Kryobehälters eine größere Dicke als an einem Bereich zwischen den Endkappen auf. Wenn die Kühllage eine mehrschichtige Metallfolie ist, kann der Wärmebrückenschalter eine oder mehr als eine Metallfolie mit der Entnahmeleitung verbinden. Die größere Dicke der Kühllage an den Endkappen ermöglicht, dass der zwischen dem Innenbehälter und dem Außenbehälter zur Verfügung stehende Raum optimal ausgenutzt werden kann, um die Masse der Kühllage zu vergrößern.

Im einfachsten Fall kann der Wärmebrückenschalter manuell betätigt werden. In einer besonders bevorzugten Ausführungsform umfasst die Vorrichtung jedoch eine Steuereinheit, welche dazu ausgebildet ist, den Wärmebrückenschalter zu schließen, wenn Kryofluid über die Entnahmeleitung aus dem Kryobehälter entnommen wird und den Wärmebrückenschalter zu öffnen, sobald eine Entnahme von Kryofluid über die Entnahmeleitung aus dem Kryobehälter beendet wird. Die Steuereinheit kann beispielsweise als Elektronik mit z.B. elektromechanisch oder hydraulisch betätigten Aktuatoren oder als rein mechanische oder hydraulische Logik ausgebildet sein. Besonders einfach kann die Steuereinheit implementiert werden, wenn diese nur die Funktion aufweist, den Wärmebrückenschalter zu schließen, wenn das Fahrzeug in Betrieb ist, z.B. wenn ein entsprechendes Steuersignal an einer Steuerleitung der Steuereinheit anliegt. Im einfachsten Fall kann die Steuereinheit damit im Wärmebrückenschalter integriert sein und dieser kann als stromlos geöffneter Schalter ausgeführt sein. In anderen, bevorzugten Ausführungsformen schließt die Steuereinheit den Wärmebrückenschalter auch, wenn keine aktive Entnahme vorliegt, aber Boil-Off-Gas über die Entnahmeleitung austritt.

Zum Schließen des Wärmebrückenschalters bei einem Austritt von Boil-Off-Gas kann die Steuereinheit unterschiedlich ausgebildet sein. Einerseits könnte die Steuereinheit ständig Messwerte empfangen, beispielsweise über einen Druck im Kryobehälter, oder es könnte eine eigene Steuerleitung von dem Überdruckventil in der Entnahmeleitung, über welches das Boil-Off-Gas abgelassen wird, zur Steuereinheit geführt sein, und die Steuereinheit könnte den Wärmebrückenschalter schließen, wenn das Überdruckventil öffnet.

Beispielsweise kann ein Überdruckventil in der Entnahmeleitung oder einer mit der Entnahmeleitung verbundenen oder in den Kryobehälter geführten Boil-Off-Leitung vorgesehen ist, und eine Steuerleitung vom Überdruckventil zur Steuereinheit geführt ist, über welche das Auslösen des Überdruckventils anzeigbar ist, und die Steuereinheit dazu ausgebildet ist, den Wärmebrückenschalter zu schließen, wenn das Überdruckventil geöffnet ist. Möglichkeiten zur elektrischen oder stromlosen Anzeige der Auslösung eines Überdruckventils sind dem Fachmann an sich bekannt, siehe beispielsweise die EP 3 489 062 A1.

Üblicherweise liegt nach der Beendigung der Entnahme kein Strom vor, sodass die Steuereinheit nach der Beendigung der aktiven Entnahme keine komplexen Berechnungen anstellen kann. Insbesondere in diesem Fall bieten sich die folgenden Lösungen an. Einerseits ist weiters bevorzugt, wenn die Steuereinheit dazu ausgebildet ist, den Wärmebrückenschalter nach einer vorbestimmten Zeitspanne nach der Beendigung der Entnahme zu schließen. Es können Annahmen getroffen und abgeschätzt werden, wann Boil-Off-Gas aus dem Kryobehälter austritt, und so beispielsweise in der Steuereinheit hinterlegt werden, dass der Wärmebrückenschalter nach 48h nach der Beendigung der Entnahme wieder schließen soll.

Wesentlich genauer kann der Zeitpunkt jedoch ermittelt werden, indem die Steuereinheit dazu ausgebildet ist, eine Hold Time des Kryobehälters zu ermitteln, wobei die Hold Time die Zeitspanne von einer Beendigung der Entnahme bis zu jenem Zeitpunkt ist, bei dem der Druck im Kryobehälter einen vordefinierten Schwellwert erreicht, wobei die Steuereinheit dazu ausgebildet ist, den Wärmebrückenschalter bei Erreichen der Hold Time nach der Beendigung der Entnahme zu schließen. Die Steuereinheit kann beispielsweise laufend während der aktiven Entnahme von Kryofluid die aktuelle Hold time des Kryobehälters berechnen und ständig die Zeit aktualisieren, nach welcher der Wärmebrückenschalter geschlossen werden soll, da die Hold Time besonders vom aktuellen Füllstand abhängig ist.

Alternativ oder zusätzlich kann eine Sensoreinheit zur Detektion eines Massenstroms in der Entnahmeleitung vorgesehen werden, und der Wärmebrückenschalter wird geschlossen, wenn Kryofluid durch die Entnahmeleitung strömt, und geschlossen, wenn kein Kryofluid durch die Entnahmeleitung strömt.

Die mechanische Ausführung des Wärmebrückenschalters kann im Prinzip beliebig gewählt werden. Bevorzugt wird jedoch, wenn der Wärmebrückenschalter zumindest ein aus Metall gefertigtes Verbindungselement umfasst, welches besonders bevorzugt ein die Entnahmeleitung oder ein im geschlossenen Zustand des Wärmebrückenschalters umgreifendes Kupfernetz umfasst, wobei das Verbindungselement im geöffnetem Zustand des Wärmebrückenschalters nur mit der Kühllage in Verbindung steht und im geschlossenem Zustand sowohl mit der Kühllage als auch mit der Entnahmeleitung in Verbindung steht, oder wobei das Verbindungselement im geöffnetem Zustand des Wärmebrückenschalters nur mit der Entnahmeleitung in Verbindung steht und im geschlossenem Zustand sowohl mit der Kühllage als auch mit der Entnahmeleitung in Verbindung steht.

Ein Problem ist in einigen Ausführungsformen, dass keine Stromquelle zur Verfügung steht, wenn das Fahrzeug nicht in Betrieb ist. In diesem Fall steht nicht immer Strom zur Verfügung, wenn der Wärmebrückenschalter geschlossen bzw. geöffnet werden soll. Es kann daher bevorzugt sein, insbesondere wenn der Wärmebrückenschalter beim Austritt von Boil-Off-Gas aus dem Kryobehälter nicht schließt, wenn die Vorrichtung ferner eine von der Entnahmeleitung gesonderte Boil-Off-Leitung mit einem Ventil umfasst, das bei einem vorbestimmten Überdruck öffnet, wobei die Boil-Off-Leitung sowohl durch den Innenbehälter, als auch durch die Kühllage und den Außenbehälter geführt ist und diese dabei durchsetzt, und zumindest über eine Länge von 0,2 m, 0,5 m, oder 0,8 m, mit der Kühllage in wärmeleitender Verbindung steht und eine Querschnittsfläche aufweist, die maximal der Hälfte (oder maximal 20 %, 40 %, 60 % oder 80 %) der Querschnittsfläche der Entnahmeleitung entspricht, wobei der Durchmesser der Boil-Off-Leitung unabhängig davon bevorzugt maximal 10 mm, maximal 6 mm oder maximal 4 mm betragen kann. Die Boil-Off-Leitung bildet somit eine permanente, jedoch kleine Wärmebrücke mit der Kühllage, wodurch die Kühllage stromunabhängig kühlbar ist, wenn Boil-Off-Gas aus dem Kryobehälter austritt, um Wärme der Kühllage an das Boil-Off-Gas zu übertragen. Im Prinzip könnte diese Ausführungsform sogar ohne Wärmebrückenschalter ausgeführt werden.

Bevorzugt ist, wenn der Kryobehälter eine Längsachse aufweist, welche bevorzugt eine Rotationsachse des Kryobehälters bildet, wobei die Entnahmeleitung eine im Wesentlichen normal zur Längsachse angeordnete Endkappe des Kryobehälters durchsetzt. Alternativ dazu könnte die Entnahmeleitung auch die Mantelfläche durchsetzen.

Grundsätzlich bringt die Vorrichtung wesentliche Verbesserung für Kryobehälter aller Arten mit sich. Besonders bevorzugt wird jedoch ein Fahrzeug mit einem Motor und einer Vorrichtung nach einer der vorgenannten Ausführungsformen vorgesehen, wobei die Entnahmeleitung zur Zuführung von Kryofluid als Kraftstoff für den Motor mit dem Motor verbunden ist.

In einem zweiten Aspekt betrifft die Erfindung ein Computerprogrammprodukt für eine Vorrichtung nach einem der Ansprüche 1 bis 9 in Verbindung mit Anspruch 3, umfassend Befehle, die bei der Ausführung des Programms durch einen Computer diesen veranlassen, die folgenden Schritte auszuführen:
- Öffnen des Wärmebrückenschalters, wenn kein Kryofluid durch die Entnahmeleitung strömt;
- Schließen des Wärmebrückenschalters, wenn Kryofluid durch die Entnahmeleitung strömt, zumindest wenn Kryofluid aktiv durch die Entnahmeleitung entnommen wird und bevorzugt auch wenn Kryofluid durch die Entnahmeleitung nach Erreichen eines vorbestimmten Höchstdruckes im Kryobehälter durch die Entnahmeleitung aus dem Kryobehälter abgelassen wird.

Bei dem Computerprogrammprodukt ist unerheblich, ob zuerst der Schritt des Öffnens oder des Schließens vorgesehen wird. Im Allgemeinen betrifft die Erfindung in einem dritten Aspekt ein Verfahren, bei dem die genannten Schritte des Öffnens und Schließens durchgeführt werden.

Vorteilhafte und nicht einschränkende Ausführungsformen der Erfindung werden nachfolgend anhand der Zeichnungen näher erläutert.
Figur 1 zeigt die erfindungsgemäße Vorrichtung in einer ersten Ausführungsform.
Figur 2 zeigt die erfindungsgemäße Vorrichtung in einer zweiten Ausführungsform.
Figur 3a zeigt ein Schaltdiagramm des erfindungsgemäßen Wärmebrückenschalters.
Figur 3b zeigt ein zu Figur 3a zugehöriges Diagramm des Drucks im Kryobehälter.
Figur 4 zeigt die erfindungsgemäße Vorrichtung in einer dritten Ausführungsform.
Figur 5 zeigt die erfindungsgemäße Vorrichtung in einer vierten Ausführungsform.

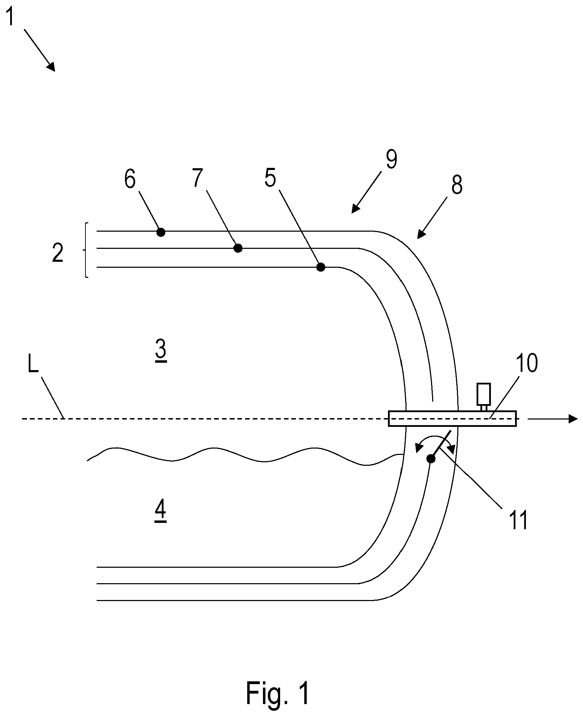

Figur 1 zeigt eine Vorrichtung 1 mit einem Kryobehälter 2, in welchem Kryofluid im gasförmigen Zustand 3 oder flüssigen Zustand 4 gelagert ist. Das Kryofluid kann beispielsweise Wasserstoff sein, sodass der Kryobehälter 2 ein Wasserstoffbehälter ist, oder das Kryofluid kann LNG (Liquefied Natural Gas) sein, sodass der Kryobehälter ein LNG-Behälter ist. Je nach Kryofluid ist der Kryobehälter somit dazu ausgelegt, Kryofluid bei Temperaturen von beispielsweise unter 150 Kelvin, im Fall von Wasserstoff sogar von unter 50 Kelvin oder unter 30 Kelvin oder im Wesentlichen 20 Kelvin, zu lagern. Je nach Anwendung könnte der Kryobehälter 2 beispielsweise zur Lagerung von sLH2 (subcooled liquid hydrogen) oder CcH2 (cryo-compressed hydrogen) ausgebildet und damit auch für entsprechende hohe Drücke ausgelegt sein, z.B. für Maximaldrücke zwischen 5 bar und 350 bar.

Um das Kryofluid möglichst lange bei niedrigen Temperaturen zu halten und den Wärmeeintrag in den Kryobehälter 2 zu verringern, weist der Kryobehälter 2 einen Innenbehälter 5 und einen von diesem allseitig beabstandeten Außenbehälter 6 auf. Dadurch kann ein Vakuum zwischen dem Innenbehälter 5 und dem Außenbehälter 6 vorgesehen werden.

Weiters weist der Kryobehälter 2 eine an sich bekannte Kühllage 7 auf, die sowohl gegenüber dem Innenbehälter 5 als auch gegenüber dem Außenbehälter 6 isoliert ist. Im einfachsten Fall ist die Kühllage 7 ein steifes, d.h. selbsttragendes Metallschild, z.B. ein Metallblech, welches in geeigneter Weise vom Innenbehälter 5 und vom Außenbehälter 6 beabstandet ist. Die Isolation des Metallschildes gegenüber dem Innenbehälter 5 und dem Außenbehälter 6 erfolgt hierbei über das vorgenannte Vakuum. Die Kühllage 7 kann eine einzelne Schicht oder ein vielschichtiges Element wie ein MLI (multi-layer insulation) sein, bei dem mehrere Metallfolien, üblicherweise Aluminiumfolien, durch schlecht wärmeleitende Zwischenlagen wie Papierschichten, Glasfaserschichten etc. getrennt sind. In einer weiteren Ausführungsform kann die Kühllage 7 eine mit Aluminium bedampfte Carbonlage sein oder ein Textil aus Aluminiumdraht und/oder mit Aluminium beschichteter Galsfaser. In der Regel umfasst die Kühllage 7 somit Metall zur Wärmeleitung, wobei auch andere Materialien eingesetzt werden könnten.

Einerseits dient die Kühllage 7 erfindungsgemäß als Strahlungsschild und andererseits als thermischer Speicher. Wenn sich die Kühllage 7 auf der Temperatur des Kryofluids befindet, wird sich bei einem Wärmeeintrag von außen zuerst die Kühllage 7 erwärmen, bevor sich das Kryofluid erwärmt. Aus diesem Grund wird auch bevorzugt, wenn die thermische Masse der Kühllage 7 möglichst groß ist. Beispielsweise kann die Kühllage 7 hierfür wie oben erwähnt als steifes Metallschild ausgebildet sein, d.h. als Metallblech und insbesondere ein Aluminiumblech oder Kupferblech mit einer Dicke von mindestens 0,1 mm, bevorzugt mindestens 0,5 mm, bevorzugt im Wesentlichen 0,75 mm. Beispielsweise kann ein Aluminiumblech mit einer Gesamtmasse von 10-20 kg eingesetzt werden. Besonders bevorzugt kann die Kühllage 7 zur Erhöhung der thermischen Masse auch an Endkappen 8 des Kryobehälters 2 eine größere Dicke als an einem Bereich zwischen den Endkappen 8 aufweisen. Beispielsweise kann ein steifes Metallschild im Mantelbereich eine Dicke von 0,75 mm aufweisen und im Endkappenbereich eine Dicke von 3 mm, wobei der Übergang stetig sein kann. Der Bereich zwischen den Endkappen 8 ist üblicherweise als Mantel 9 ausgebildet, der sich in Richtung einer Längsachse L des Kryobehälters 2 erstreckt.

Durch die Wärmeleitfähigkeit der Kühllage 7, insbesondere wenn diese aus Aluminium oder Kupfer gefertigt ist, kann sich eine an einer beliebigen Stelle eingebrachte Wärme rasch über die gesamte Kühllage 7 verteilen. Durch die Isolation der Kühllage 7 gegenüber dem Innenbehälter 5 und dem Außenbehälter 6 kann somit davon gesprochen werden, dass die Wärmeleitfähigkeit der Kühllage 7 um den Umfang des Kryobehälters 2 wesentlich größer ist als in den Kryobehälter 2 hinein, beispielsweise mindestens 100000-mal oder mindestens 1000000-mal größer.

Der hierin beschriebene Kryobehälter 2 wird üblicherweise als Kraftstoffbehälter eines nicht weiter dargestellten Fahrzeugs eingesetzt und kann zu diesem Zweck beispielsweise am Fahrzeugrahmen des Fahrzeugs montiert werden. Um einem Motor des Fahrzeugs das Kryofluid als Kraftstoff zuzuführen, ist eine Entnahmeleitung 10 in den Kryobehälter 2 geführt. Dabei durchsetzt die Entnahmeleitung 10 den Kryobehälter 2, d.h. die Entnahmeleitung 10 durchsetzt den Innenbehälter 5, den Außenbehälter 6 und die dazwischen befindliche Kühllage 7. Wenn die Kühllage 7 den Innenbehälter 5 nicht vollständig umschließt, z.B. eine ringförmige Ausnehmung in der Mitte des Kryobehälters 2 aufweist, könnte die Entnahmeleitung 10 auch im Bereich der Ausnehmung vom Innenbehälter 5 zum Außenbehälter 6 geführt werden, worunter hierin verstanden wird, dass die Entnahmeleitung 10 die Kühllage 7 durchsetzt.

Wie in Figur 1 gezeigt kann die Entnahmeleitung 10 eine der Endkappen 8 durchsetzen und beispielswiese normal zur Längsachse L verlaufen. In anderen Ausführungsformen kann die Entnahmeleitung 10 auch den Mantel 9 durchsetzen und beispielswiese normal zur Längsachse L des Kryobehälters 2 radial verlaufen.

Aus Figur 1 ist ersichtlich, dass sich an der Schnittstelle zwischen der Kühllage 7 und der Entnahmeleitung 10 ein sogenannter Wärmebrückenschalter 11 befindet. Der Wärmebrückenschalter 11 hat die Eigenschaft, dass er in einer geschlossenen Stellung zur Bildung einer Wärmebrücke einen Kontakt zwischen der Kühllage 7 und der Entnahmeleitung 10 herstellt und in einer geöffneten Stellung zur Beseitigung der Wärmebrücke die Kühllage 7 von der Entnahmeleitung 10 trennt. Die physische Ausgestaltung des Wärmebrückenschalters 11 kann auf unterschiedlichste Arten erfolgen, von denen einige weiter unten erläutert werden.

Der Wärmebrückenschalter 11 ermöglicht, dass im geöffneten Zustand keine Wärmebrücke zwischen der Kühllage 7 und der Entnahmeleitung 10 vorliegt. Dies hat den Zweck, dass die Kühllage 7 nach einer Erwärmung die Wärme nicht unmittelbar über die Entnahmeleitung 10 an das Kryofluid übertragen soll bzw. die Entnahmeleitung 10 unmittelbar vom Außenbehälter 6 in die Kühllage 7 übertragen soll. Beispielsweise kann das Fahrzeug mit dem Kryobehälter 2 abgestellt sein. Der Wärmeeintrag von außen erwärmt nun die Kühllage 7, jedoch wird diese Wärme durch den geöffneten Wärmebrückenschalter 11 nicht unmittelbar an die Entnahmeleitung 10 und damit an das Kryofluid abgegeben. Dadurch kann die Zeit erhöht werden, nach welcher das Kryofluid im Kryobehälter 2 nach Beendigung der letzten Entnahme eine gewisse Temperatur und damit einen bestimmten Druck erreicht.

Im geschlossenen Zustand ermöglicht der Wärmebrückenschalter 11, dass aus dem Kryobehälter 2 austretendes Kryofluid eine Wärme der Kühllage 7 aufnehmen und somit aus dem Kryobehälter 2 abführen kann. Das Schließen des Wärmebrückenschalters 2 dient somit der Kühlung der Kühllage 7. Es ist ersichtlich, dass der Wärmebrückenschalter nur geschlossen werden soll, wenn Kryofluid durch die Entnahmeleitung 10 strömt.

Der Wärmebrückenschalter 11 ist somit zwischen der geschlossenen Stellung und der geöffneten Stellung beweglich. Der Wärmebrückenschalter 11 kann dabei beispielsweise manuell betätigt werden, z.B. kann ein Benutzer des Fahrzeuges den Wärmebrückenschalter 11 öffnen, nachdem er die Fahrt mit dem Fahrzeug beendet hat, und den Wärmebrückenschalter 11 bei einem Fahrtantritt schließen.

Alternativ oder zusätzlich kann das Öffnen und Schließen des Wärmebrückenschalters 11 automatisch erfolgen. Beispielsweise kann der Wärmebrückenschalter 11 als stromlos geöffneter Schalter ausgebildet sein und eine Steuerleitung des Wärmebrückenschalters 11 kann mit dem Motor, einer Elektronik des Fahrzeugs und/oder einer Elektronik des Kyobehälters 2 (welche beispielsweise einen Economizer und/oder ein Druckmanagementsystem des Kryobehälters 2 regelt) verbunden sein. Wenn an der Steuerleitung nun ein Signal anliegt, das den Betrieb des Fahrzeugs und damit die Entnahme von Kryofluid aus dem Kryobehälter 2 anzeigt, liegt ein Strom am Wärmebrückenschalter 11 an, wodurch dieser geschlossen wird. Zu diesem Zweck kann eine Schaltlogik im Wärmebrückenschalter 11 implementiert sein, die als einfache Steuereinheit angesehen werden kann.

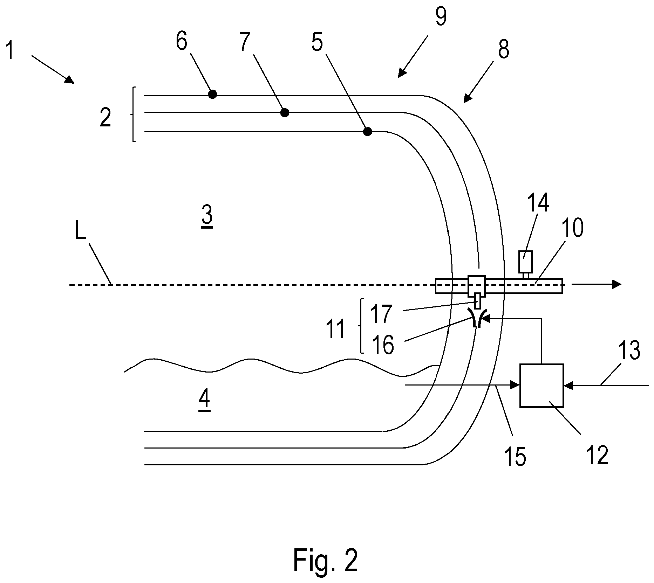

Figur 2 zeigt eine Ausführungsform, bei welcher die Steuereinheit 12 vom Wärmebrückenschalter 11 gesondert ausgeführt ist. Die Steuereinheit 12 steuert den Wärmebrückenschalter 11 kabelgebunden oder kabellos an. Beispielsweise kann die Steuereinheit 12 über eine Steuerleitung 13 mit dem Motor bzw. einer Elektronik des Fahrzeugs bzw. des Kryobehälters 2 verbunden sein und den Wärmebrückenschalter 11 in Abhängigkeit von einem über die Steuerleitung 13 empfangenen Signal öffnen bzw. schließen.

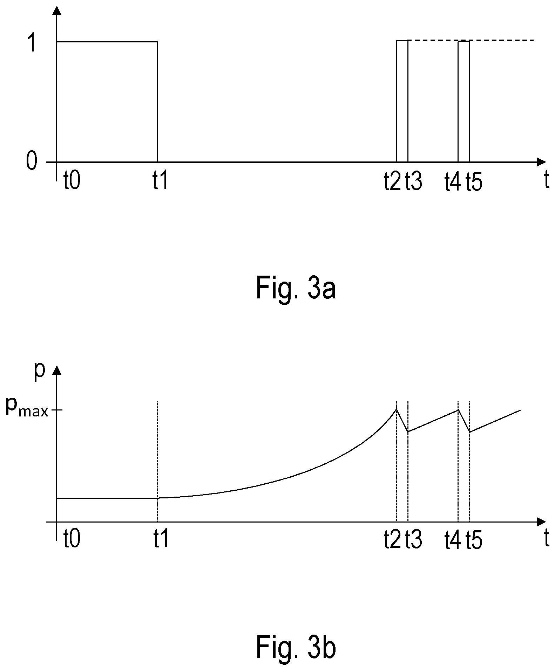

Unter Verweis auf die Figuren 3a und 3b werden nun mögliche Schaltzustände des Wärmebrückenschalters 11 erläutert. Figur 3a zeigt auf der vertikalen Achse den Schaltzustand des Wärmebrückenschalters 11, wobei "1" den geschlossenen Zustand und "0" den geöffneten Zustand bezeichnet. Auf der horizontalen Achse ist die Zeit t aufgetragen. Figur 3b zeigt auf der vertikalen Achse einen Druck p im Kryobehälter 2, wobei pₘₐₓ einen maximal zulässigen Druck im Kryobehälter 2 bezeichnet. Auf der horizontalen Achse ist die Zeit t aufgetragen.

Im in den Figuren 3a und 3b dargestellten Beispiel findet zum Zeitpunkt t0 eine aktive Entnahme von Kryofluid aus dem Kryobehälter 2 statt und setzt sich bis zum Zeitpunkt t1 fort. Diese Entnahme entspricht beispielsweise einer Fahrt des Fahrzeuges, auf dem der Kryobehälter 2 montiert ist. Während dem Zeitraum t0-t1 bleibt der Wärmebrückenschalter 11 geschlossen und die Temperatur im Kryobehälter 2 und damit der Druck im Kryobehälter 2 bleiben im Wesentlichen konstant niedrig, d.h. auf einem Niveau unterhalb des Auslösedrucks eines Überdruckventils bzw. auf einem Druck, der ausreichend für den Fahrbetrieb ist. Durch den geschlossenen Wärmebrückenschalter 11 kühlt das durch die Entnahmeleitung 11 strömende Kryofluid die Kühllage 7 ab.

Zum Zeitpunkt t1 der Beendigung der Entnahme von Kryofluid aus dem Kryobehälter 2 wird der Wärmebrückenschalter 11 geöffnet, um zu verhindern, dass von der Kühllage 7 aufgenommene Wärme an das im Kryobehälter 2 befindliche Kryofluid abgegeben wird. Wäre der Wärmebrückenschalter 11 geschlossen, würde über den im geschlossenen Zustand zusätzlichen Verbindungspfad Wärmebrückenschalter - Entnahmeleitung - Innenbehälter. bzw. über den Pfad Außenbehälter - Entnahmeleitung - Wärmebrückenschalter zusätzlich Wärme in die Kühllage 7 eingebracht werden, wodurch die Erwärmung schneller erfolgen würde als bei geöffnetem Wärmebrückenschalter, was durch die durch den Wärmebrückenschalter 11 geschaffene Freiheit der örtlichen Anbringung bedingt ist. Aus Figur 3b ist jedoch ersichtlich, dass sich die Temperatur des Kryofluids im Kryobehälter 2 langsam erhöht und damit auch der Druck in diesem steigt. Dies ist durch andere unvermeidbare Wärmebrücken, Wärmestrahlung von der Kühllage 7 etc. bedingt. Der Druck steigt zu Beginn langsamer als später, da zu Beginn die Kühllage 7 noch kalt ist, daher der Wärmeeintrag von der Kühllage 7 in das Kryofluid anfangs langsamer ist, was der gewünscht Effekt ist. Dieser Effekt steht auch im Bezug zur Masse der Kühllage 7, denn umso größer die Masse der Kühllage 7 ist, desto größer ist die Verzögerung der Erwärmung.

Da der Kryobehälter 2 für einen maximal zulässigen Druck pₘₐₓ ausgelegt ist, weist dieser in der Regel ein an die Entnahmeleitung 10 angeschlossenes Überdruckventil 14 auf, welches auslöst, wenn der Druck im Kryobehälter 2 den maximal zulässigen Druck pₘₐₓ erreicht, was im dargestellten Beispiel zum Zeitpunkt t2 der Fall ist. Aus Figur 3b ist ersichtlich, dass der Druck im Kryobehälter 2 abfällt, wenn das Überdruckventil 14 Kryofluid über den Zeitraum t2-t3 aus dem Kryobehälter 2 als sogenanntes Boil-Off-Gas auslässt.

Bevorzugt kann vorgesehen werden, dass der Wärmebrückenschalter 11 zum Zeitpunkt t2 wieder schließt, wie in Figur 3a dargestellt ist. Dies hat den Hintergrund, dass das Boil-Off-Gas die über den Zeitraum t1-t2 erwärmte Kühllage 7 über den Zeitraum t2-t3 wieder kühlen kann, da das Boil-Off-Gas über die Entnahmeleitung 10 ausströmt.

Es kann zusammengefasst werden, dass der Wärmebrückenschalter 11 schließen kann, wenn der Druck im Kryobehälter 2 einen vordefinierten Schwellwert erreicht. Dies kann auf verschiedene Arten umgesetzt werden, beispielsweise über einen Sensor am Überdruckventil, der das Öffnen des Überdruckventils detektiert. Das Überdruckventil kann z.B. direkt ein mechanisches, elektrisches oder hydraulisches Signal erzeugen, welches den Wärmebrückenschalter 11 schließt, gegebenenfalls auch ohne Steuereinheit 12. Alternativ oder zusätzlich können diverse Annahmen getroffen werden und die Steuereinheit 12 kann den Wärmebrückenschalter 11 nach einer vorbestimmten Zeitspanne nach der Beendigung der Entnahme öffnen, z.B. kann in der Steuereinheit 12 ein konkreter Zahlenwert für die erwartete Zeitspanne t1-t2 vorab hinterlegt werden.

Weiters kann die Steuereinheit 12 dazu ausgebildet ist, eine Hold Time des Kryobehälters 2 zu ermitteln, wobei die Hold Time die Zeitspanne von einer Beendigung der Entnahme bis zu jenem Zeitpunkt ist, bei dem der Druck im Kryobehälter 2 einen vordefinierten Schwellwert erreicht, wobei die Steuereinheit 12 dazu ausgebildet ist, den Wärmebrückenschalter 11 bei Erreichen der Hold Time nach der Beendigung der Entnahme zu schließen. Beispielsweise ermittelt die Steuereinheit 12 während der Fahrt, d.h. während des Zeitraumes t0-t1, laufend die aktuelle Hold Time, die beispielsweise über den aktuellen Füllstand, Druck und/oder Temperatur berechnet werden kann, zu welchem Zweck die Steuereinheit 12 entsprechende Messwerte über eine Messwertleitung 15 empfangen kann. Sollte die Steuereinheit 12 nun zum Zeitpunkt t1 feststellen, dass die Entnahme beendet wurde, kann die Steuereinheit 12 die zuletzt ermittelte Hold Time heranziehen und den Wärmebrückenschalter 11 nach dieser Zeit öffnen.

Bei den Ausführungen, bei denen die Steuereinheit 12 den Wärmebrückenschalter 11 nach einer vorbestimmten bzw. berechneten Zeitspanne öffnet, ist vorteilhaft, dass über den Zeitraum t1-t2 im Wesentlichen kein Strom benötigt wird. In der Regel wird nämlich kein Strom über den Zeitraum t1-t2 zur Verfügung stehen, da das Fahrzeug über diesem Zeitraum abgestellt ist und nicht betrieben wird. Der zum Zeitpunkt t2 benötigte Strom zum Öffnen des Wärmebrückenschalters 11 kann beispielsweise über eine Kapazität oder dergleichen bereitgehalten werden. In diesen Ausführungsformen wird der Wärmebrückenschalter 11 zum Zeitpunkt t2 geschlossen und bleibt beispielsweise auf unbestimmte Zeit geschlossen, was mit der gestrichelten Linie angedeutet ist. Die Vorteile der Kühlung durch das Boil-Off-Gas überwiegen hier die Nachteile des Wärmeeintrags durch die ab dem Zeitpunkt t3 vorliegenden negativen Wärmebrücke über den Wärmebrückenschalter 11.

In einer anderen Ausführungsform könnte die Steuereinheit 12 auch nach dem Zeitpunkt t1 mit Strom versorgt werden, beispielsweise über eine Batterie. In dieser Ausführungsform könnte die Steuereinheit 12 z.B. laufend Messwerte über einen Druck im Kryobehälter 2 empfangen und den Wärmebrückenschalter 11 gezielt ansteuern, d.h. den Wärmebrückenschalter 11 bei einem Austritt von Boil-Off-Gas über den Zeitraum t2-t3 bzw. t4-t5 schließen und über einen Zeitraum t3-t4 öffnen, da zu diesem Zeitpunkt kein kühlendes Boil-Off-Gas austritt, was in Figur 3a durch die durchgezogenen Linien im Zeitraum t2-t5 dargestellt ist. Die Steuereinheit 12 könnte die Information, ob Boil-Off-Gas aus der Entnahmeleitung 10 austritt, nicht nur über Druckmesswerte erhalten, sondern auch durch einen in der Entnahmeleitung 10 angeordneten Durchflussmesser oder Temperatursensor oder über eine mit dem Überdruckventil 14 verbundene Steuerleitung, die das Öffnen bzw. Schließen des Überdruckventils 14 anzeigt.

Auch wenn kein Strom zur Verfügung steht, kann die vorgenannte Steuereinheit 12 umgesetzt werden, z.B. wenn die Steuereinheit 12 eine pneumatische Steuerleitung umfasst, welche mit dem Wärmebrückenschalter 11 und dem Kryobehälter 12 bzw. dem Überdruckventil 14 verbunden ist und welche den Wärmebrückenschalter 11 schließt, sobald bzw. kurz bevor oder kurz nachdem der maximal zulässige Druck pₘₐₓ erreicht wurde, und wobei die pneumatische Steuerleitung den Wärmebrückenschalter 11 wieder öffnet, wenn der Druck unter einen vorbestimmten Druck fällt oder eine vorbestimmte Zeitspanne erreicht wurde.

In allen vorgenannten Ausführungsformen kann ein Computer, der bevorzugt in der genannten Steuereinheit 12 implementiert ist, dazu ausgebildet sein, ein Computerprogramm ablaufen zu lassen, welches den Wärmebrückenschalter 11 wie folgt ansteuert:
- Öffnen des Wärmebrückenschalters 11, wenn kein Kryofluid durch die Entnahmeleitung 10 strömt;
- Schließen des Wärmebrückenschalters 11, wenn Kryofluid durch die Entnahmeleitung 10 strömt, zumindest wenn Kryofluid aktiv durch die Entnahmeleitung 10 entnommen wird und bevorzugt auch wenn Kryofluid durch die Entnahmeleitung 10 nach Erreichen eines vorbestimmten Höchstdruckes im Kryobehälter 2 durch die Entnahmeleitung 10 aus dem Kryobehälter 2 abgelassen wird.

Wie bereits oben erwähnt kann der Wärmebrückenschalter 11 auf viele verschiedene Arten ausgebildet werden. Insbesondere kann der Wärmebrückenschalter 11 ein aus Metall gefertigtes Verbindungselement umfassen, welches wie in Figur 1 gezeigt schwenken kann. Alternativ könnte das Verbindungselement auf einer Linearführung geführt sein. In Figur 2 ist gezeigt, dass das Verbindungselement ein Kupfernetz 16 umfassen kann, welches im geschlossenen Zustand einen mit der Entnahmeleitung 10 verbundenen Stift 17 oder die Entnahmeleitung 10 selbst umgreifen könnte. Im geöffneten Zustand kann das Kupfernetz 16 dann wieder vom Stift 17 bzw. der Entnahmeleitung 10 gelöst werden.

Üblicherweise wird vorgesehen, dass das Verbindungselement im geöffnetem Zustand des Wärmebrückenschalters 11 nur mit der Kühllage 7 in Verbindung steht und im geschlossenem Zustand sowohl mit der Kühllage 7 als auch mit der Entnahmeleitung 10 in Verbindung steht, oder umgekehrt. Weiters wäre auch möglich, dass das Verbindungselement im geöffneten Zustand sowohl von der Kühllage 7 als auch von der Entnahmeleitung 10 getrennt wird.

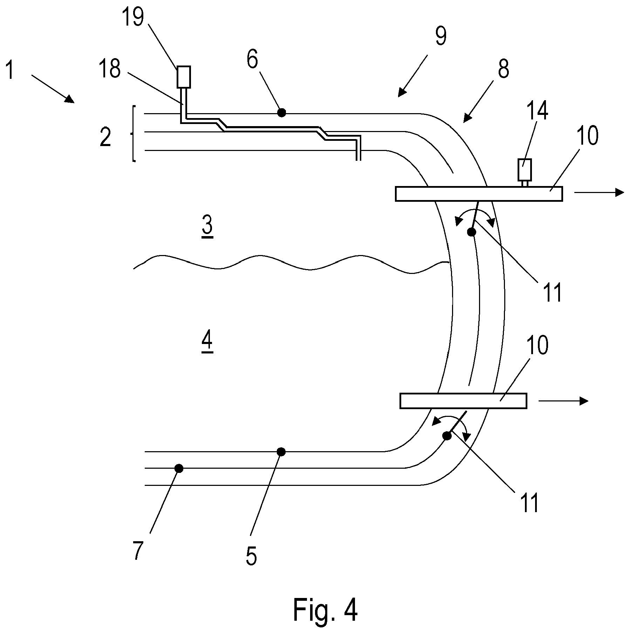

Figur 4 zeigt eine weitere Ausführungsform, bei der zwei Entnahmeleitungen 10 vorgesehen werden. Beide Entnahmeleitungen 10 werden wie oben beschrieben mit einem Wärmebrückenschalter 11 ausgeführt und können selektiv und unabhängig voneinander mit der Kühllage 7 verbunden werden, um zwei verschiedene Wärmebrücken herzustellen. Besonders ist, dass eine Entnahmeleitung 10 in den in Betriebslage oben befindlichen Raum des Kryobehälters 2 geführt ist, um Kryofluid im gasförmigen Zustand zu entnehmen, und die andere Entnahmeleitung 10 in den in Betriebslage unten befindlichen Raum des Kryobehälters 2 geführt ist, um Kryofluid im gasförmigen Zustand zu entnehmen. Die beiden Wärmebrückenschalter 11 können unabhängig voneinander angesteuert werden, beispielswiese in Abhängigkeit davon, über welche Entnahmeleitung 10 gerade Kryofluid entnommen wird. Üblicherweise wird Boil-Off-Gas nur aus der Entnahmeleitung 10 für das gasförmige Kryofluid austreten, sodass die Steuerung zum Schließen des Wärmebrückenschalters 11 nach der Beendigung der Entnahme nur für diesen Wärmebrückenschalter 11 vorgesehen wird. Es kann eine gemeinsame Steuereinheit 12 für beide Wärmebrückenschalter 11 vorgesehen werden.

Um die Vorrichtung konstruktiv besonders einfach auszugestalten, kann auch vorgesehen werden, dass der Wärmebrückenschalter 11 nach der Beendigung der aktiven Entnahme nicht schließt, wenn Boil-Off-Gas austritt. In diesen Fällen könnte wie schematisch in Figur 4 gezeigt eine von der Entnahmeleitung 10 gesonderte Boil-Off-Leitung 18 mit einem Ventil 19 vorgesehenen werden, wobei das Ventil 19 ein Überdruckventil ist und bei einem vorbestimmten Überdruck öffnet, wobei die Boil-Off-Leitung 18 sowohl durch den Innenbehälter 5, als auch durch die Kühllage 7 und den Außenbehälter 6 geführt ist und diese dabei durchsetzt, und zumindest über eine Länge von 0,2 m, 0,5 m, oder 0,8 m, mit der Kühllage 7 in Verbindung steht und eine Querschnittsfläche aufweist, die maximal der Hälfte (oder maximal 20 %, 40 %, 60 % oder 80 %) der Querschnittsfläche der Entnahmeleitung beträgt. Unabhängig von der Entnahmeleitung kann die Boil-Off-Leitung 18 beispielsweise einen Durchmesser von maximal 10 mm, maximal 6 mm oder maximal 4 mm aufweisen. Durch die Länge, über welche die Boil-Off-Leitung 18 mit der Kühllage 7 in Verbindung steht, ergibt sich zwar eine ständige Wärmebrücke, die aufgrund des geringen Durchmessers möglichst klein gehalten wird. Gleichzeitig trägt die Wärmebrücke durch die Boil-Off-Leitung 18 jedoch dazu bei, dass austretendes Boil-Off-Gas die Kühllage 7 kühlen kann. Aufgrund des geringen Durchmessers eignet sich die Boil-Off-Leitung 18 nicht zur Entnahme von Kryofluid zum Betrieb eines Motors, sondern nur zum Ablassen von Kryofluid zum Zwecke des Druckabbaus. Diese extra Leitung 18 ist eine Lösung, um trotz des fehlenden Stroms bei abgestelltem Fahrzeug die kühlende Wirkung des Boil-Off Gases zu nutzen, gegebenenfalls auch gemeinsam mit einem Wärmebrückenschalter 11. De Wärmebrückenschalter könnte in dieser Ausführungsform beispielsweise nur bei einer aktiven Entnahme von Kryofluid schließen.

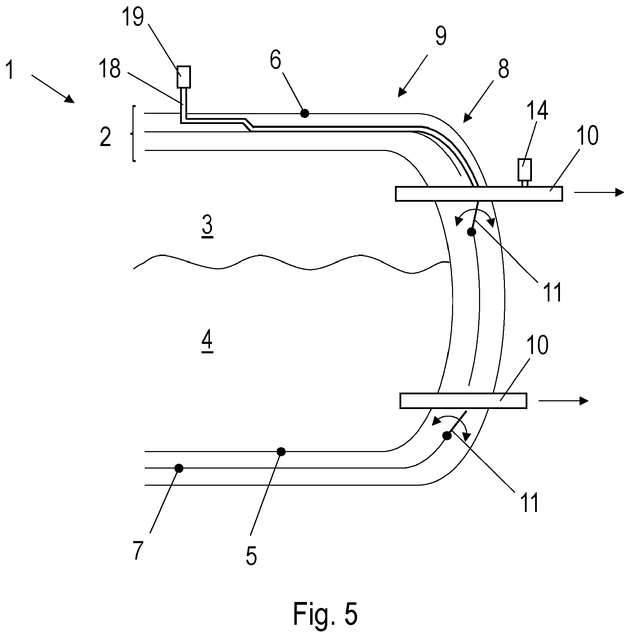

Aus Figur 4 ist überdies ersichtlich, dass die Boil-Off-Leitung 18 nach dem Durchtritt durch den Innenbehälter 5 nicht unmittelbar an die Kühllage 7 ansetzt, um keine unmittelbare Wärmebrücke zu bilden. Genauso ist die Boil-Off-Leitung 18 innerhalb des isolierten Bereichs über einen vorbestimmten Abstand von der Kühllage 7 entkoppelt, bevor diese aus dem Außenbehälter 6 austritt, um keine unmittelbare Wärmebrücke zu bilden. Mit dem Wärmebrückenschalter 11 ist diese Restriktion nicht gegeben, wodurch die Freiheit der örtlichen Anbringung erzielt wird
Figur 5 zeigt eine Alternative zu Figur 4, wobei die Boil-Off-Leitung 18 nicht als eigenständige Leitung den Innenbehälter 5 durchsetzt, sondern im isolierten Bereich zwischen dem Innenbehälter 5 und dem Außenbehälter 6 an die Entnahmeleitung 10 angeschlossen ist. Die Entnahmeleitung 10 steht auch hier zumindest über eine Länge von 0,2 m, 0,5 m, oder 0,8 m, mit der Kühllage 7 in Verbindung und weist einen Durchmesser auf, der maximal 10 mm, maximal 6 mm oder maximal 4 mm beträgt. Auch hier setzt die Boil-Off-Leitung 18 nicht unmittelbar an die Kühllage 7 ab, nachdem sie von der Entnahmeleitung 10 abzweigt, um keine unmittelbare Wärmebrücke zu bilden. Genauso ist die Boil-Off-Leitung 18 innerhalb des isolierten Bereichs über einen vorbestimmten Abstand von der Kühllage 7 entkoppelt, bevor diese aus dem Außenbehälter 6 austritt, um keine unmittelbare Wärmebrücke zu bilden
Diese Ausführungsformen mit gesonderter Boil-Off-Leitung 18 könnten auch ohne Wärmebrückenschalter 11 ausgeführt werden. Hierbei wird bevorzugt vorgesehen, dass die Entnahmeleitung 10 ständig gegenüber der Kühllage 7 isoliert ist, d.h. dass zwischen dieser Entnahmeleitung 10 und der Kühllage 7 keine Wärmebrücke vorliegt, wobei die Entnahmeleitung 10 über eine möglichst kurze Strecke durch die Kühllage 7 geführt ist, beispielsweise senkrecht durch diese. In Summe ergibt sich eine Vorrichtung 1, umfassend einen Kryobehälter 2, insbesondere einen Wasserstoffbehälter, mit einem Innenbehälter 5 und einen den Innenbehälter 5 umschließenden Außenbehälter 6, wobei zwischen dem Innenbehälter 5 und dem Außenbehälter 6 eine den Innenbehälter 5 zumindest teilweise umhüllende Kühllage 7 angeordnet ist, welche sowohl gegenüber dem Innenbehälter 5 als auch dem Außenbehälter 6 isoliert ist, wobei eine Entnahmeleitung 10 sowohl durch den Innenbehälter 5, als auch durch die Kühllage 7 und den Außenbehälter 6 geführt ist und diese dabei durchsetzt, ferner umfassend eine von der Entnahmeleitung 10 gesonderte Boil-Off-Leitung 18 mit einem Ventil 19, das bei einem vorbestimmten Überdruck öffnet, wobei die Boil-Off-Leitung 18 im isolierten Bereich zwischen dem Innenbehälter 5 und dem Außenbehälter 6 an die Entnahmeleitung 10 anschließt oder sowohl durch den Innenbehälter 5, als auch durch die Kühllage 7 und den Außenbehälter 6 geführt ist und diese dabei durchsetzt, und zumindest über eine Länge von 0,2 m, 0,5 m, oder 0,8 m, mit der Kühllage 7 in Verbindung steht und eine Querschnittsfläche aufweist, die maximal der Hälfte der Querschnittsfläche der Entnahmeleitung entspricht und/oder wobei der Durchmesser der Boil-Off-Leitung bevorzugt maximal 10 mm, maximal 6 mm oder maximal 4 mm beträgt.

## Patentansprüche

1. Vorrichtung (1), umfassend einen Kryobehälter (2), insbesondere einen Wasserstoffbehälter, mit einem Innenbehälter (5) und einen den Innenbehälter (5) umschließenden Außenbehälter (6), wobei zwischen dem Innenbehälter (5) und dem Außenbehälter (6) eine den Innenbehälter (5) zumindest teilweise umhüllende Kühllage (7) angeordnet ist, welche sowohl gegenüber dem Innenbehälter (5) als auch dem Außenbehälter (6) isoliert ist,
wobei eine Entnahmeleitung (10) sowohl durch den Innenbehälter (5), als auch durch die Kühllage (7) und den Außenbehälter (6) geführt ist und diese dabei durchsetzt,
**dadurch gekennzeichnet, dass**
die Vorrichtung (1) einen Wärmebrückenschalter (11) umfasst, welcher dazu ausgebildet ist, in einer geschlossenen Stellung zur Bildung einer Wärmebrücke einen Kontakt zwischen der Kühllage (7) und der Entnahmeleitung (10) herzustellen und in einer geöffneten Stellung zur Beseitigung der Wärmebrücke die Kühllage (7) von der Entnahmeleitung (10) zu trennen.

2. Vorrichtung (1) nach Anspruch 1, wobei die Kühllage (7) ein steifes Metallschild, bevorzugt ein Aluminiumschild, oder eine einschichtige oder mehrschichtige Metallfolie ist und bevorzugt an Endkappen (8) des Kryobehälters (2) eine größere Dicke als an einem Bereich zwischen den Endkappen (8) aufweist.

3. Vorrichtung (1) nach Anspruch 1 oder 2, ferner umfassend eine Steuereinheit (12), welche dazu ausgebildet ist, den Wärmebrückenschalter (11) zu schließen, wenn Kryofluid über die Entnahmeleitung (10) aus dem Kryobehälter (2) entnommen wird und den Wärmebrückenschalter (11) zu öffnen, sobald eine Entnahme von Kryofluid über die Entnahmeleitung (10) aus dem Kryobehälter (2) beendet wird, wobei die Steuereinheit (12) den Wärmebrückenschalter (11) bevorzugt nicht nur dann schließt, wenn eine aktive Entnahme von Kryofluid aus der Entnahmeleitung (10) vorliegt, sondern auch wenn Boil-Off-Gas über die Entnahmeleitung (10) austritt.

4. Vorrichtung (1) nach Anspruch 3, wobei die Steuereinheit (12) dazu ausgebildet ist, den Wärmebrückenschalter (11) nach einer vorbestimmten Zeitspanne nach der Beendigung der Entnahme zu schließen, und/oder wobei die Steuereinheit (12) dazu ausgebildet ist, eine Hold Time des Kryobehälters (2) zu ermitteln, wobei die Hold Time die Zeitspanne von einer Beendigung der Entnahme bis zu jenem Zeitpunkt ist, bei dem der Druck im Kryobehälter (2) einen vordefinierten Schwellwert erreicht, wobei die Steuereinheit (12) dazu ausgebildet ist, den Wärmebrückenschalter (11) bei Erreichen der Hold Time nach der Beendigung der Entnahme zu schließen.

5. Vorrichtung nach Anspruch 3 oder 4, wobei ein Überdruckventil (14, 19) in der Entnahmeleitung (10) oder einer mit der Entnahmeleitung (10) verbundenen oder in den Kryobehälter (2) geführten Boil-Off-Leitung (18) vorgesehen ist, und eine Steuerleitung vom Überdruckventil (14, 19) zur Steuereinheit (10) geführt ist, über welche das Auslösen des Überdruckventils (14, 19) anzeigbar ist, und die Steuereinheit (10) dazu ausgebildet ist, den Wärmebrückenschalter (10) zu schließen, wenn das Überdruckventil (14, 19) geöffnet ist.

6. Vorrichtung (1) nach einem der Ansprüche 1 bis 5, wobei der Wärmebrückenschalter (11) zumindest ein aus Metall gefertigtes Verbindungselement umfasst, welches besonders bevorzugt ein die Entnahmeleitung (10) im geschlossenen Zustand des Wärmebrückenschalters (11) umgreifendes Kupfernetz (16) umfasst, wobei das Verbindungselement im geöffnetem Zustand des Wärmebrückenschalters (11) nur mit der Kühllage (7) in Verbindung steht und im geschlossenem Zustand sowohl mit der Kühllage (7) als auch mit der Entnahmeleitung (10) in Verbindung steht, oder umgekehrt.

7. Vorrichtung (1) nach einem der Ansprüche 1 bis 6, ferner umfassend eine Boil-Off-Leitung (18) mit einem Ventil (19), das bei einem vorbestimmten Überdruck öffnet, wobei die Boil-Off-Leitung (18) zumindest über eine Länge von 0,2 m, 0,5 m, oder 0,8 m, mit der Kühllage (7) in wärmeleitender Verbindung steht und eine Querschnittsfläche aufweist, die maximal der Hälfte der Querschnittsfläche der Entnahmeleitung (10) entspricht wobei die Boil-Off-Leitung (18) bevorzugt einen Durchmesser von maximal 10 mm, maximal 6 mm oder maximal 4 mm aufweist.

8. Vorrichtung (1) nach einem der Ansprüche 1 bis 7, wobei der Kryobehälter (2) eine Längsachse (L) aufweist, welche bevorzugt eine Rotationsachse des Kryobehälters (2) bildet, wobei die Entnahmeleitung (10) eine im Wesentlichen normal zur Längsachse (L) angeordnete Endkappe oder einen zwischen Endkappen befindlichen Mantel des Kryobehälters (2) durchsetzt.

9. Fahrzeug mit einem Motor und einer Vorrichtung (1) nach einem der Ansprüche 1 bis 8, wobei die Entnahmeleitung (10) zur Zuführung von Kryofluid als Kraftstoff für den Motor mit dem Motor verbunden ist.

10. Computerprogrammprodukt für eine Vorrichtung (1) nach einem der Ansprüche 1 bis 9 in Verbindung mit Anspruch 3, umfassend Befehle, die bei der Ausführung des Programms durch einen Computer diesen veranlassen, die folgenden Schritte auszuführen:
- Öffnen des Wärmebrückenschalters (11), wenn kein Kryofluid durch die Entnahmeleitung (10) strömt;
- Schließen des Wärmebrückenschalters (11), wenn Kryofluid durch die Entnahmeleitung (10) strömt, zumindest wenn Kryofluid aktiv durch die Entnahmeleitung (10) entnommen wird und bevorzugt auch wenn Kryofluid durch die Entnahmeleitung (10) nach Erreichen eines vorbestimmten Höchstdruckes im Kryobehälter (2) durch die Entnahmeleitung (10) aus dem Kryobehälter (2) abgelassen wird.

## Claims

1. A device (1) comprising a cryogenic container (2), in particular a hydrogen container, comprising an inner container (5) and an outer container (6) enclosing the inner container (5), with a cooling layer (7) being arranged between the inner container (5) and the outer container (6), the cooling layer enveloping the inner container (5) at least partially and being insulated with respect to both the inner container (5) and the outer container (6),
with a removal line (10) being routed through the inner container (5) as well as through the cooling layer (7) and the outer container (6), thereby passing through them,
**characterized in that**
the device (1) comprises a thermal bridge switch (11) designed for establishing a contact between the cooling layer (7) and the removal line (10) in a closed position so as to form a thermal bridge and for separating the cooling layer (7) from the removal line (10) in an opened position so as to eliminate the thermal bridge.

2. A device (1) according to claim 1, wherein the cooling layer (7) is a rigid metal shield, preferably an aluminium shield, or a single-layer or multi-layer metal foil and preferably has a greater thickness at end caps (8) of the cryogenic container (2) than at an area between the end caps (8).

3. A device (1) according to claim 1 or 2, furthermore comprising a control unit (12) which is designed for closing the thermal bridge switch (11) when cryogenic fluid is removed from the cryogenic container (2) via the removal line (10) and for opening the thermal bridge switch (11) as soon as the removal of cryogenic fluid from the cryogenic container (2) via the removal line (10) is stopped, wherein the control unit (12) preferably closes the thermal bridge switch (11) not only when an active removal of cryogenic fluid from the removal line (10) exists, but also when boil-off gas escapes through the removal line (10).

4. A device (1) according to claim 3, wherein the control unit (12) is designed for closing the thermal bridge switch (11) after a predetermined period of time upon completion of the removal, and/or wherein the control unit (12) is designed for determining a hold time of the cryogenic container (2), the hold time being the time span from the end of the removal until the point in time at which the pressure in the cryogenic container (2) reaches a predefined threshold, with the control unit (12) being designed for closing the thermal bridge switch (11) when the hold time is reached upon completion of the removal.

5. A device according to claim 3 or 4, wherein a pressure relief valve (14, 19) is provided in the removal line (10) or in a boil-off line (18) connected to the removal line (10) or routed into the cryogenic container (2), and a control line is routed from the pressure relief valve (14, 19) to the control unit (10) via which the triggering of the pressure relief valve (14, 19) can be indicated, and the control unit (10) is designed for closing the thermal bridge switch (10) when the pressure relief valve (14, 19) is opened.

6. A device (1) according to any one of claims 1 to 5, wherein the thermal bridge switch (11) comprises at least one connecting element made of metal, which particularly preferably comprises a copper mesh (16) surrounding the removal line (10) in the closed state of the thermal bridge switch (11), wherein the connecting element is connected only to the cooling layer (7) in the opened state of the thermal bridge switch (11) and is connected to both the cooling layer (7) and the removal line (10) in the closed state, or vice versa.

7. A device (1) according to any one of claims 1 to 6, furthermore comprising a boil-off line (18) comprising a valve (19) that opens at a predetermined overpressure, wherein the boil-off line (18) is in a heat-conducting connection with the cooling layer (7) at least over a length of 0.2 m, 0.5 m or 0.8 m and has a cross-sectional area which corresponds at most to half of the cross-sectional area of the removal line (10), wherein the boil-off line (18) preferably has a diameter of a maximum of 10 mm, a maximum of 6 mm or a maximum of 4 mm.

8. A device (1) according to any one of claims 1 to 7, wherein the cryogenic container (2) has a longitudinal axis (L) which preferably forms an axis of rotation of the cryogenic container (2), with the removal line (10) passing through an end cap arranged essentially normal to the longitudinal axis (L) or through a jacket of the cryogenic container (2) that is located between end caps.

9. A vehicle comprising an engine and a device (1) according to any one of claims 1 to 8, wherein the removal line (10) is connected to the engine for supplying cryogenic fluid as a fuel for the engine.

10. A computer program product for a device (1) according to any one of claims 1 to 9 in connection with claim 3, comprising commands which, when the program is executed by a computer, prompt the latter to perform the following steps:
- opening the thermal bridge switch (11) when no cryogenic fluid flows through the removal line (10);
- closing the thermal bridge switch (11) when cryogenic fluid flows through the removal line (10), at least when cryogenic fluid is actively removed through the removal line (10) and preferably also when cryogenic fluid is discharged from the cryogenic container (2) through the removal line (10) after a predetermined maximum pressure has been reached in the cryogenic container (2) via the removal line (10).

## Revendications

1. Dispositif (1) comprenant un conteneur cryogénique (2), en particulier un conteneur d'hydrogène, ayant un conteneur intérieur (5) et un conteneur extérieur (6) entourant le conteneur intérieur (5), dans lequel une couche de refroidissement (7) enveloppant au moins partiellement le conteneur intérieur (5) et étant isolée à la fois par rapport au conteneur intérieur (5) et par rapport au conteneur extérieur (6) est disposée entre le conteneur intérieur (5) et le conteneur extérieur (6),
dans lequel une conduite de prélèvement (10) est acheminée à la fois à travers le conteneur intérieur (5) et à travers la couche de refroidissement (7) et le conteneur extérieur (6), en les traversant,
**caractérisé en ce que**
le dispositif (1) comprend un interrupteur de pont thermique (11) conçu pour établir un contact entre la couche de refroidissement (7) et la conduite de prélèvement (10) en position fermée, formant ainsi un pont thermique, et pour déconnecter la couche de refroidissement (7) de la conduite de prélèvement (10) en position ouverte, éliminant ainsi le pont thermique.

2. Dispositif (1) selon la revendication 1, dans lequel la couche de refroidissement (7) est un panneau métallique rigide, de préférence un panneau en aluminium, ou une feuille métallique monocouche ou multicouche, et présente de préférence une épaisseur qui est supérieure au niveau des embouts (8) du conteneur cryogénique (2) que sur une zone entre les embouts (8).

3. Dispositif (1) selon la revendication 1 ou 2, comprenant en outre une unité de commande (12) conçue pour fermer l'interrupteur de pont thermique (11) lorsqu'un fluide cryogénique est prélevé du conteneur cryogénique (2) par la conduite de prélèvement (10) et pour ouvrir l'interrupteur de pont thermique (11) dès que le prélèvement d'un fluide cryogénique du conteneur cryogénique (2) par la conduite de prélèvement (10) est terminé, dans lequel l'unité de commande (12) de préférence ne ferme pas l'interrupteur de pont thermique (11) uniquement lorsqu'il existe un prélèvement actif d'un fluide cryogénique de la conduite de prélèvement (10), mais également lorsqu'un gaz d'évaporation s'échappe par la conduite de prélèvement (10).

4. Dispositif (1) selon la revendication 3, dans lequel l'unité de commande (12) est conçue pour fermer l'interrupteur de pont thermique (11) après un intervalle de temps prédéterminé suivant la fin du prélèvement, et/ou dans lequel l'unité de commande (12) est conçue pour déterminer un temps de maintien du conteneur cryogénique (2), le temps de maintien étant l'intervalle de temps de la fin du prélèvement jusqu'au moment où la pression dans le conteneur cryogénique (2) atteint une valeur seuil prédéfinie, l'unité de commande (12) étant conçue pour fermer l'interrupteur de pont thermique (11) lorsque le temps de maintien est atteint après la fin du prélèvement.

5. Dispositif selon la revendication 3 ou 4, dans lequel une soupape de surpression (14, 19) est prévue dans la conduite de prélèvement (10) ou dans une conduite d'évaporation (18) reliée à la conduite de prélèvement (10) ou acheminée dans le conteneur cryogénique (2), et une conduite de commande est acheminée de la soupape de surpression (14, 19) à l'unité de commande (10) permettant l'affichage du déclenchement de la soupape de surpression (14, 19), et l'unité de commande (10) est conçue pour fermer l'interrupteur de pont thermique (10) lorsque la soupape de surpression (14, 19) est ouverte.

6. Dispositif (1) selon l'une quelconque des revendications 1 à 5, dans lequel l'interrupteur de pont thermique (11) comprend au moins un élément de connexion en métal, comprenant, de manière particulièrement préférée, une maille de cuivre (16) enserrant la conduite de prélèvement (10) lorsque l'interrupteur de pont thermique (11) est en position fermée, l'élément de connexion étant en contact uniquement avec la couche de refroidissement (7), lorsque l'interrupteur de pont thermique (11) est en position ouverte, et étant en contact à la fois avec la couche de refroidissement (7) et la conduite de prélèvement (10), lorsque la position est fermé, ou vice versa.

7. Dispositif (1) selon l'une quelconque des revendications 1 à 6, comprenant en outre une conduite d'évaporation (18) comprenant une soupape (19) s'ouvrant à une surpression prédéterminée, la conduite d'évaporation (18) étant en liaison thermo-conductrice avec la couche de refroidissement (7) au moins sur une longueur de 0,2 m, 0,5 m ou 0,8 m et présentant une section transversale correspondant au plus à la moitié de la section transversale de la conduite de prélèvement (10), la conduite d'évaporation (18) de préférence ayant un diamètre maximal de 10 mm, un diamètre maximal de 6 mm ou un diamètre maximal de 4 mm.

8. Dispositif (1) selon l'une quelconque des revendications 1 à 7, dans lequel le conteneur cryogénique (2) a un axe longitudinal (L) qui forme de préférence un axe de rotation du conteneur cryogénique (2), la conduite de prélèvement (10) traversant un embout disposé sensiblement perpendiculairement à l'axe longitudinal (L) ou une coque du conteneur cryogénique (2) située entre les embouts.

9. Véhicule comportant un moteur et un dispositif (1) selon l'une quelconque des revendications 1 à 8, dans lequel la conduite de prélèvement (10) est reliée au moteur pour l'alimentation de fluide cryogénique en tant que carburant pour le moteur.

10. Produit programme d'ordinateur pour un dispositif (1) selon l'une quelconque des revendications 1 à 9 en combinaison avec la revendication 3, comprenant des instructions qui, lorsque le programme est exécuté par un ordinateur, conduisent celui-ci à mettre en œuvre les étapes suivantes:
- ouvrir l'interrupteur de pont thermique (11) lorsqu'aucun fluide cryogénique ne circule dans la conduite de prélèvement (10);
- fermer l'interrupteur de pont thermique (11) lorsqu'un fluide cryogénique circule dans la conduite de prélèvement (10), au moins lorsqu'un fluide cryogénique est prélevé activement par la conduite de prélèvement (10) et, de préférence, également lorsqu'un fluide cryogénique est évacué du conteneur cryogénique (2) par la conduite de prélèvement (10) après avoir atteint une pression maximale prédéterminée dans le conteneur cryogénique (2) par la conduite de prélèvement (10).
